(19) Europäisches Patentamt

European Patent Office

Office européen des brevets

(11) Veröffentlichungsnummer: **0 104 494**
**B1**

(12) **EUROPÄISCHE PATENTSCHRIFT**

(45) Veröffentlichungstag der Patentschrift:
09.03.88

(21) Anmeldenummer: 83108632.7

(22) Anmeldetag: 01.09.83

(51) Int. Cl.⁴: **F 24 D 3/00, E 04 C 5/16**

(54) Klammer zum Halten eines Fussbodenheizungsrohrs an einem Bewehrungsdraht.

(30) Priorität: 29.09.82 DE 8227277 U

(43) Veröffentlichungstag der Anmeldung:
04.04.84 Patentblatt 84/14

(45) Bekanntmachung des Hinweises auf die Patenterteilung:
09.03.88 Patentblatt 88/10

(84) Benannte Vertragsstaaten:
AT BE CH DE FR IT LI LU NL SE

(56) Entgegenhaltungen:
DE - A - 3 014 789
DE - U - 8 031 171
FR - A - 2 219 632
GB - A - 2 077 319
US - A - 1 434 352

(73) Patentinhaber: Friedrichsfeld GmbH Keramik- und Kunststoffwerke, Steinzeugstrasse 50,
D-6800 Mannheim 71 (DE)

(72) Erfinder: Lorenz, Hans-Joachim, Hauptstrasse 107,
D-2082 Gross Nordende (DE)

(74) Vertreter: Glawe, Delfs, Moll & Partner Patentanwälte,
Postfach 26 01 62 Liebherrstrasse 20,
D-8000 München 26 (DE)

# Beschreibung

Die Erfindung betrifft eine Klammer zum Halten eines Fussbodenheizungsrohres an einem Bewehrungsdraht bzw. einer Bewehrungsmatte nach dem Oberbegriff von Patentanspruch 1 bzw. 2.

Bei der Verlegung eines Heizungsestrichs legt man zunächst eine Bewehrungsmatte aus, befestigt an dieser die Klammern in der erforderlichen Dichte und Anordnung und verlegt dann das Heizungsrohr von Klammer zu Klammer, bevor der Estrich gegossen wird. Bei manchen bekannten Klammern ist der Schlitz bwz. sind die Schlitze zur Aufnahme eines Bewehrungsdrahts nach oben hin offen. Dies erschwert die Montage, weil die Bewehrungsmatte, auf der der Monteur steht, im Montagebereich angehoben, die Klammer untergesetzt und die Bewehrungsmatte wieder gesenkt werden muss. Bei anderen Klammern sind die Schlitze nach unten hin offen, was aber den Nachteil hat, dass die Bewehrungsmatte nach unten hin entweichen und somit die Befestigung sich lösen kann. Die eingangs genannte Anordnung mit einem zur Seite sich öffnenden Schlitz (DE-U-81 03 322) lässt sich leichter montieren, hat aber den Nachteil, dass sie einer besonderen Klemmeinrichtung bedarf, um den Bewehrungsdraht sicher im Schlitz zu halten, was zum einen die Montage erschwert und zum anderen nicht zuverlässig ist. Schliesslich sind Klammern bekannt (DE-U-80 31 171; AT-A-365 763), bei welchen neben den das Heizungsrohr aufnehmenden Klammerteil ein nach oben offener Haken zur Aufnahme des Bewehrungsdrahts vorgesehen ist. Dabei braucht der Bewehrungsdraht zwar nicht ganz so hoch gehoben zu werden wie bei denjenigen Klammern, bei denen er durch den für die Aufnahme des Rohrs vorgesehenen Klammerteil abgesenkt und daher mindestens bis auf dessen Höhe angehoben werden muss; jedoch ist noch eine gewisse Anhebung der vom Monteur nach unten gedrückten Matte erforderlich und es besteht ausserdem die Gefahr des unerwünschten Entweichens des Bewehrungsdrahts aus dem nur eine geringe Höhe und keine oberseitige Sicherung aufweisenden Schlitz.

Zwar ist es bei einer Klammer der eingangs genannten Art bekannt (DE-U-80 31 171), die Klammer ohne vorherige Anhebung der Matte derart zu montieren, dass der erwähnte, nach oben keilförmig auslaufende Haken in seitlich gekippter Lage der Klammer unter den Draht geschoben und anschliessend die Klammer in die vorgesehene Lage zurückgekippt wird. Jedoch verbietet sich die Anwendung dieses Verfahrens in den meisten Fällen deshalb, weil bei dem Zurückkippen diejenige Kante, an welcher die Klammerunterfläche in den Hakenteil übergeht, unter ggf. beträchtlicher Last quer zur Kantenrichtung auf der unter dem Estrich verlegten, relativ weichen Wärmedämmschicht oder der zur Isolierung verlegten empfindlichen Folie über eine dem grossen Kippwinkel von 90° entsprechende, beträchtliche Strecke verschoben werden muss und dabei die Wärmedämmschicht bzw. Folie zerreisst oder beschädigt.

Der Erfindung liegt die Aufgabe zugrunde, eine Klammer der eingangs genannten Art zu schaffen, die eine sichere Haltewirkung bei einfacher Montagemöglichkeit mit kleinerem Kippwinkel gewährleistet.

Die im Patentanspruch 1 angegebene erfindungsgemässe Lösung besteht darin, dass die Auflagefläche, gesehen in Einbaulage, zu der die Schlitzöffnung enthaltenden Seite hin von einer dieser Seite näher als das Aufnahmelager liegenden Stelle ansteigt. Da der Anstieg der Auflagefläche an einer Stelle beginnt, die der die Schlitzöffnung enthaltenden Seite näher liegt als das Aufnahmelager des Schlitzes, erstreckt sich die ebene Auflagefläche beiderseits über das vom Aufnahmelager gefällte Lot hinaus, so dass damit eine stabile Stellung bei vertikaler Belastung der Klammer erreicht wird.

Eine im Patentanspruch 1 wiedergegebene zweite Lösung besteht erfindungsgemäss darin, dass die Auflagefläche, gesehen in Einbaulage, zu der die Schlitzöffnung enthaltenden Seite hin in einen ansteigenden Teil übergeht und dass die Ausnehmung eine Rasteinrichtung nahe der der Öffnung des Schlitzes abgewendeten Seite zum Festhalten des Bewehrungsdrahts umfasst. Beim Zurückkippen der Klammer aus der ersten Montagestellung in die Endstellung ergreift die Rasteinrichtung den zweiten Draht und hält ihm fest, wodurch ein Verkippen der Klammer aus der vorgesehenen Stellung verhindert wird.

Zweckmässigerweise verläuft der Schlitz von seiner Öffnung bis zu dem Aufnahmelager hin stetig fallend. Das Aufnahmelager ist in diesem Fall einfach als das geschlossene Ende des fallend angeordneten Schlitzes ausgebildet. Statt dessen kann nach der Erfindung auch vorgesehen sein, dass das Aufnahmelager gegenüber dem Schlitz stufig vertieft abgesetzt ist. Dadurch wird die stabile Lage des Drahts in dem Aufnahmelager auch dann gesichert, wenn der Schlitz nicht fallend (obwohl dies in diesem Zusammenhang auch möglich ist) verläuft, sondern horizontal oder gar ansteigend. In jedem Fall kann das Aufnahmelager eine Rasteinrichtung zum Festhalten des Drahtes umfassen, obwohl eine solche im allgemeinen nicht erforderlich ist.

Die Erfindung wird im folgenden näher unter Bezugnahme auf die Zeichnung erläutert, die vorteilhafte Ausführungsbeispiele veranschaulicht. Darin zeigen:

Fig. 1, 2 und 3 eine Seitenansicht, Stirnansicht und perspektivische Ansicht einer ersten Ausführungsform,

Fig. 4, 5 und 6 die erste Ausführungsform in unterschiedlichen Montagestadien,

Fig. 7 eine zweite Ausführungsform,

Fig. 8 und 9 eine Seiten- und Stirnansicht einer dritten Ausführungsform,

Fig. 10 und 11 eine Seiten- und Stirnansicht einer vierten Ausführungsform und

Fig. 12 einen Montagestock.

Die Klammer setzt sich in allen Ausführungsformen zusammen aus einem oberen Klammerteil 1 und einem unteren Sockelteil 2.

Der Klammerteil 1 ist mit zwei einander gegenüberstehenden, eine Öffnung 3 zur Aufnahme des Rohrs einschliessenden Klammerbacken 4 dargestellt. Es versteht sich aber, dass statt der gezeigten Klammerbackenanordnung eine andere treten kann, beispielsweise mit zwei einander kreuzenden Öffnungen 3 für unterschiedliche Rohrverlegung.

Der Sockel wird von einer vorderen Seitenfläche 5, einer hinteren Seitenfläche 6 und zwei Flanken 7 sowie einer Unterfläche 8 begrenzt. Die Unterfläche 8 bildet in ihrem hinteren Bereich 9 eine ebene Auflagefläche, mit der die Klammer im fertigmontierten Zustand auf der Unterstützungsfläche aufliegt, und in ihrem vorderen Teil eine ansteigende Fläche 10.

Von der vorderen Seitenfläche 5 geht der hinten geschlossene Schlitz 11 aus, der zur Aufnahme eines Bewehrungsdrahts 12. In der vertikalen Mittelebene, parallel zu den Flanken 7 ist eine ebenfalls schlitzförmige, nach unten, vorn und hinten offene Ausnehmung 13 zur Aufnahme eines quer zum Draht 12 verlaufenden Bewehrungsdrahts 14 vorgesehen.

In der Ausgestaltung der Einzelheiten weisen die dargestellten Ausführungsformen Unterschiede auf.

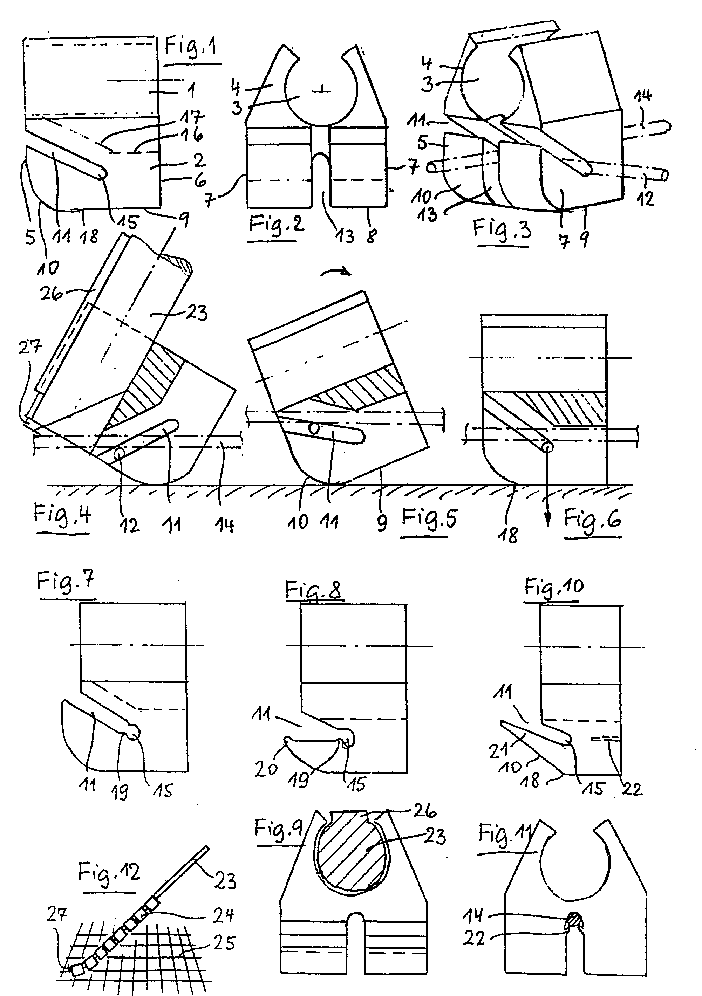

Bei der ersten Ausführungsform (Fig. 1–6) fluchtet die vordere Seitenfläche 5 des Sockels mit derjenigen des Klammerteils 1. Der Schlitz 11 führt schräg abwärts nach hinten. Seine tiefste Stelle erreicht er an seinem geschlossenen Ende, das etwa in der Mitte zwischen der vorderen und der hinteren Seitenfläche in einem Abstand über der Auflagefläche 9 liegt, der der gewünschten Mindesthöhe der Bewehrungsdrähte über der Unterlagsfläche entspricht.

Dieses geschlossene hintere Ende des Schlitzes 11 bildet das Aufnahmelager 15 für einen Bewehrungsdraht.

Hinter dem Aufnahmelager 15 ist die schlitzförmige Ausnehmung 13 bei 16 in einer Höhe begrenzt, die um mindestens den doppelten Durchmesser der Bewehrungsdrähte über dem tiefsten Punkt des Aufnahmelagers 15 liegt, damit die Klammer an Kreuzungspunkten einer Bewährungsmatte in jeder beliebigen Richtung eingesetzt werden kann, auch so, dass der in der Ausnehmung 13 liegende Draht über dem im Aufnahmelager 15 liegenden Draht sich befindet. Etwa oberhalb des Aufnahmelagers 15 steigt die obere Begrenzung 17 der schlitzförmigen Ausnehmung 13 nach vorne an, etwa entsprechend dem Verlauf des Schlitzes 11.

Der ansteigende Bereich 10 der Unterfläche 8 beginnt an der Stelle 18, die hinreichend weit für eine stabile Auflage der Klammer auf dem Boden vor dem Aufnahmelager 15 vorgesehen ist. Der ansteigende Bereich 10 ist gut ausgerundet, um bei der im folgenden beschriebenen Montage die ggf. empfindliche Unterlagfläche zu schonen.

Bei der Montage setzt man die Klammer gemäss Fig. 4 zunächst so schräg nach vorne gekippt an, dass der Draht 12 von der Öffnung des Schlitzes 11 aufgenommen werden kann. Wenn danach die Klammer in Pfeilrichtung (Fig. 5) zurückgekippt wird, wird der Draht 12 unter der kuhfussartigen Hebelwirkung angehoben und gleitet schliesslich – ggf. mit der Nachhilfe eines nach vorne gerichteten Schubs auf die Klammer – in das vom geschlossenen Ende des Schlitzes 11 gebildete Aufnahmelager 15. Man erkennt in Fig. 6 deutlich, dass dann das von dem Aufnahmelager 15 bzw. dem Draht 12 gefällte Lot weit hinter der Stelle 18 auf der Unterstützungsfläche auftrifft und dass demgemäss eine stabile Lage der Klammer unter vertikaler Belastung gesichert ist.

Bei diesem Vorgang setzt sich die Klammer mit der schlitzförmigen Ausnehmung 13 rittlings über den den Bewehrungsdraht 12 an der Montagestelle kreuzenden Bewehrungsdraht 14.

Man erkennt, dass die fluchtende vordere Stirnfläche von Klammerteil 1 und Sockel 2 für die beschriebene Funktion nicht unabdingbar ist. Die Ausführungsform gemäss Fig. 7 verzichtet daher auf die Übereinstimmung dieser Ebenen. Sie erreicht dabei den Vorteil, dass die Unterfläche des Schlitzes 11 an der Mündung frei liegt und ein Bewehrungsdraht daher leichter gefangen werden kann. Ferner unterscheidet sich die Ausführungsform gemäss Fig. 7 von der vorbeschriebenen dadurch, dass bei 19 eine Rasteinrichtung als Verengung des Schlitzes 11 vorgesehen ist, die beim Eintritt des Bewehrungsdrahts elastisch ausweichen kann und ihn anschliessend im Aufnahmelager 15 gegenüber den üblicherweise vorkommenden Störkräften sichert.

Im Ausführungsbeispiel gemäss Fig. 8 ist der Schlitz 11 zumindest mit seiner Unterfläche horizontal nach vorne geführt, wo er in der vorderen Seitenfläche mit einer ein wenig nach oben gehenden Fangnase 20 endet. Diese Ausführungsform hat den Vorteil, dass tiefliegende Bewehrungsdrähte leichter gefangen werden können, weil die Nase 20 tiefer liegt als die Öffnung des Schlitzes 11 in den vorbeschriebenen Beispielen. Nach dem Zurückkippen der Klammer liegt der Bewehrungsdraht im allgemeinen vor dem Aufnahmelager 15 und vor dessen Rasteinrichtung 19 auf der dann horizontalen Unterfläche des Schlitzes 11. Der Draht kann anschliessend durch weiteres Zurückkippen oder durch einen Schub der Klammer nach vorne in das Aufnahmelager 15 überführt werden.

Die Ausführungsform gemäss Fig. 10 gleicht im Prinzip derjenigen gemäss Fig. 7 insofern, als der Schlitz 11 nach hinten geneigt verläuft. Die Nase 21 zum Fangen eines Bewehrungsdrahts ist etwas schlanker ausgeführt. Der wesentliche Unterschied gegenüber den vorbeschriebenen Ausführungsformen besteht darin, dass die Stelle 18, an welcher der ansteigende Teil 10 der Unterfläche beginnt, nicht oder nicht wesentlich vor dem Aufnahmelager 15 liegt, so dass die geometrische Anordnung als solche die Standstabilität nicht gewährleistet. Dafür ist in der schlitzförmigen Ausnehmung 13 zumindest in deren hinterem Bereich bei 22 eine Rasteinrichtung vorgesehen, die den in dieser Ausnehmung befindlichen, über dem im Aufnahmelager 15 liegenden Draht angeordneten Bewehrungsdraht 14 durch Rastwirkung in der montierten Lage festhält. Sie ist in Fig. 11 in Gestalt zweier widerhakenartig nach oben weisenden Lippen angedeutet, die den Draht 14 zwar in Richtung nach oben passieren lassen, ihm aber in der umgekehrten Richtung beträchtlichen Widerstand entgegensetzen. Der Draht 14 gelangt in die in Fig. 11 gezeichnete Stellung beim Zurückkippen der Klammer in der letzten Montagephase. Nur gegen den Widerstand der Rasteinrichtung am Draht 14 könnte die Klammer aus dieser Stellung wieder nach vorne gekippt werden.

Fig. 12 veranschaulicht den Montagestock 23 mit einer Vielzahl darauf magazinierter Klammern 24 bei der Verwendung über einer Bewehrungsmatte 25. Das untere Ende des Montagestocks 23 ist derart gegenüber dem übrigen Teil desselben abgebogen, dass es sich in etwa horizontaler Lage befindet, wenn das hintere Ende noch in angenehmer Greifhöhe ist. In die Klammern sind mit der für das Rohr vorgesehenen Öffnung 3 auf den Stock lose aufgeschoben. Dieser weist an seinem Rücken eine durchgehende Rippe 26 auf (s. Fig. 4 und 9), die in der Öffnung zwischen den Klemmenbacken 4 liegt und dadurch die Drehstellung der Klammern am Stock bestimmt. Am Ende des Stocks befindet sich ein Anschlag 27, der die jeweils letzte Klammer vor einem ungewollten Abgleiten sichert, so dass sie gehaltert am Stockende durch Bewegung des Stocks montiert werden kann. Anschliessend löst man den Stock, indem man ihn unter elastischer Verformung der Klammerbacken 4 aus der Öffnung 3 heraushebelt, indem man beispielsweise das Griffende des Stocks aus der in Fig. 12 gezeigten Stellung weiter absenkt.

Der Montagestock 23 hat den Vorteil, dass sich der Monteur nicht zu bücken braucht, um die Klammern 24 zu montieren. Ist die Klammer in gekippter Stellung an den vom Schlitz aufzunehmenden Draht herangeführt, bis der Draht zumindestens im Anfangsbereich des Schlitzes liegt, so kann die Klammer 24 anschliessend mit dem als Hebel dienenden Stock 23 zurückgekippt werden, wodurch die Klammer 23 in Bezug auf den Draht in der Art eines Kuhfusses wirkt und ihn anhebt bis er aufgrund der Neigung des Schlitzes oder eines zusätzlichen Schubs ganz in den Schlitz hineingleitet. Sind mehrere Klammern 24 in einem Montagestock 23 magaziniert, so können sie an dem Montagestock leicht verschiebbar angeordnet sein, so dass gegebenenfalls schon die Schwerkraft genügt, um sie nach dem Lösen einer montierten Klammer derart nachrutschen zu lassen, dass stets die letzte Klammer sich an dem Montagestock in Montagestellung befindet.

Man erkennt, dass bei allen Ausführungsformen verhältnismässig kleine Kippwinkel zur Montage erforderlich sind, die um 45° teilweise wesentlich darunter liegen. Man erkennt auch, dass die Unterstützungsfläche nicht durch scharfe Kanten beansprucht wird und der im Schlitz 11 liegende Bewehrungsdraht nicht leicht aus der vorgesehenen Stellung entweichen kann, weil sein Aufnahmelager infolge der horizontalen oder schrägen Anordnung des Schlitzes oben abgedeckt ist.

Man erkennt ferner, dass die Klammern an den Kreuzungspunkten einer Baustahlmatte in allen Richtungen eingesetzt werden können, wobei es nicht darauf ankommt, welcher Draht oben und welcher unten liegt. Für die Ausführungen gemäss Fig. 1 bis 9 ist dies ohne weiteres klar. Bei der Ausführung gemäss Fig. 10 und 11 muss der im Schlitz 11 liegende Draht an sich tiefer liegen als der mit der Rasteinrichtung 22 zusammenwirkende Draht. Jedoch ist es ohne weiteres möglich, in der Ausnehmung 13 unter der Rasteinrichtung 22 noch eine zweite Rasteinrichtung an derjenigen Stelle vorzusehen, an der ein unter dem im Schlitz 11 liegenden Draht angeordneter Draht liegen würde. Dann kann auch diese Klammer richtungsunabhängig an jedem Kreuzungspunkt eingesetzt werden.

### Patentansprüche

1. Klammer zum Halten eines Fussbodenheizungsrohres an einem Bewehrungsdraht (12), die zwischen einem zur Aufnahme des Rohrs bestimmten Klammerteil (1) und einer gegenüberliegenden Auflagefläche (8, 9) mindestens einen zu einer Seite (5) der Klammer hin offenen Schlitz (11) zur Aufnahme des Bewehrungsdrahts (12) aufweist, wobei der Schlitz (11) ein gegenüber dem sonstigen Schlitzverlauf zur Auflagefläche (8, 9) hin vertieftes Aufnahmelager (15) für den Bewehrungsdraht (12) enthält, dadurch gekennzeichnet, dass die Auflagefläche (8, 9), gesehen in Einbaulage, zu der die Schlitzöffnung (11) enthaltenden Seite (5) hin von einer dieser Seite näher als das Aufnahmelager (15) liegenden Stelle (18) ansteigt.

2. Klammer zum Halten eines Fussbodenheizungsrohrs an einer Bewehrungsmatte (25), wobei die Klammer zwischen einem zur Aufnahme des Rohrs bestimmten Klammerteil (1) und einer gegenüberliegenden Auflagefläche (8, 9) einen zu einer Seite (5) der Klammer hin offenen Schlitz (11) zur Aufnahme eines ersten Bewehrungsdrahts (12) aufweist und der Schlitz (11) ein gegenüber dem sonstigen Schlitzverlauf zur Auflagefläche (8, 9) hin vertieftes Aufnahmelager (15) für den ersten Bewehrungsdraht (12) enthält, und wobei weiterhin an der Klammer eine quer zum Aufnahmelager (15) verlaufende, zur Auflagefläche (8, 9) hin offene Ausnehmung (13) zur Aufnahme eines zweiten, quer zum ersten Bewehrungsdraht (12) verlaufenden Bewehrungsdrahts (14) vorgesehen ist, dadurch gekennzeichnet, dass die Auflagefläche (8, 9), gesehen in Einbaulage, zu der die Schlitzöffnung enthaltenden Seite (5) hin in einen ansteigenden Teil übergeht und dass die Ausnehmung (13) eine Rasteinrichtung (22) nahe der der Öffnung des Schlitzes (11) abgewendeten Seite (6) zum Festhalten des zweiten Bewehrungsdrahts (14) umfasst.

3. Klammer nach Anspruch 1 oder 2, dadurch gekennzeichnet, dass der Schlitz (11) von seiner Öffnung bis zu dem Aufnahmelager (15) stetig fallend verläuft.

4. Klammer nach Anspruch 1 oder 2, dadurch gekennzeichnet, dass das Aufnahmelager (15) gegenüber dem Schlitz (11) stufig abgesetzt ist.

5. Klammer nach einem der Ansprüche 1 bis 4, dadurch gekennzeichnet, dass das Aufnahmelager (15) eine Rasteinrichtung (19) zum Festhalten des Drahts (12) enthält.

**Claims**

1. Clamp for holding a floor heating tube on a reinforcing wire (12), which clamp, between a clamp part (1), intended for locating the tube, and an opposite bearing surface (8, 9), has at least one slot (11), open towards one side (5) of the clamp, for locating the reinforcing wire (12), with the slot (11) containing a locating socket (15) for the reinforcing wire (12), which locating socket (15) is deepened towards the bearing surface (8, 9) relative to the rest of the slot profile, characterized in that the bearing surface (8, 9), viewed in the installed position, rises towards the side (5) containing the slot opening (11) from a point (18) located nearer to this side than the locating socket (15).

2. Clamp for holding a floor heating tube on a reinforcing mat (25), with the clamp, between a clamp part (1), intended for locating the tube, and an opposite bearing surface (8, 9), having a slot (11), open towards one side (5) of the clamp, for locating a first reinforcing wire (12), and the slot (11) containing a locating socket (15) for the first reinforcing wire (12), which locating socket (15) is deepened towards the bearing surface (8, 9) relative to the rest of the slot profile, and with, moreover, a recess (13) being provided on the clamp for locating a second reinforcing wire (14) which runs transversely to the first reinforcing wire (12), which recess (13) runs transversely to the locating socket (15) and is open towards the bearing surface (8, 9), characterized in that the bearing surface (8, 9), viewed in the installed position, merges into a rising part towards the side (5) containing the slot opening, and that the recess (13), near to the side (6) remote from the opening of the slot (11), comprises a catch device (22) for holding the second reinforcing wire (14) in place.

3. Clamp according to Claim 1 or 2, characterized in that the slot (11) runs in a continuously downward manner from its opening to the locating socket (15).

4. Clamp according to Claim 1 or 2, characterized in that the locating socket (15) is offset in a stepped manner relative to the slot (11).

5. Clamp according to one of Claims 1 to 4, characterized in that the locating socket (15) contains a catch device (19) for holding the wire (12) in place.

**Revendications**

1. Agrafe pour la fixation d'un tube de chauffage par le sol à un fer d'armature (12), présentant, entre une partie d'agrafe (1) destinée à recevoir le tube et une surface d'appui opposée (8, 9), au moins une fente (11) ouverte vers un côté (5) de l'agrafe et destinée à recevoir le fer d'armature (12), la fente (11) contenant, pour le fer d'armature (12), un logement de support (15) creusé plus profondément en direction de la surface d'appui (8, 9) que le reste du tracé de la fente, caractérisée en ce que la surface d'appui (8, 9), considérée en position montée, remonte vers le côté (5) qui contient l'ouverture de la fente (11), à partir d'un point (18) qui est situé plus près de ce côté que le logement de support (15).

2. Agrafe pour la fixation d'un tube de chauffage par le sol à un treillis soudé pour béton armé (25), l'agrafe présentant, entre une partie d'agrafe (1) destinée à recevoir le tube et une surface d'appui opposée (8, 9), une fente (11) ouverte vers un côté (5) de l'agrafe et destinée à recevoir un premier fil d'armature (12), la fente (11) contenant, pour le premier fil d'armature (12), un logement de support (15) creusé plus profondément en direction de la surface d'appui (8, 9) que le reste du tracé de la fente et, en outre, une entaille (13) s'étendant perpendiculairement au logement de support (15), ouverte vers la surface d'appui (8, 9) et destinée à recevoir un second fil d'armature (14) perpendiculaire au premier fil d'armature (12) étant formée dans l'agrafe, caractérisée en ce que la surface d'appui (8, 9), considérée en position montée, se poursuit, en direction du côté (5) contenant l'ouverture de la fente, en une partie qui remonte, et en ce que l'entaille (13) comprend, près du côté (6) situé à l'opposé de l'ouverture de la fente (11), un dispositif d'encliquetage (22) pour le maintien du second fil d'armature (14).

3. Agrafe selon la revendication 1 ou 2, caractérisée en ce que la fente (11) a un tracé en descente continue depuis son ouverture jusqu'au logement de support (15).

4. Agrafe selon la revendication 1 ou 2, caractérisée en ce que le logement de support (15) est décalé en gradin par rapport à la fente (11).

5. Agrafe selon l'une quelconque des revendications 1 à 4, caractérisée en ce que le logement de support (15) contient un dispositif d'encliquetage (19) pour le maintien du fer (12).

Fig.1
Fig.2
Fig.3
Fig.4
Fig.5
Fig.6
Fig.7
Fig.8
Fig.9
Fig.10
Fig.11
Fig.12